(19) Europäisches Patentamt / European Patent Office / Office européen des brevets

(11) **EP 2 788 288 B1**

(12) **FASCICULE DE BREVET EUROPEEN**

(45) Date de publication et mention de la délivrance du brevet:
**04.05.2016 Bulletin 2016/18**

(21) Numéro de dépôt: **12810373.6**

(22) Date de dépôt: **07.12.2012**

(51) Int Cl.:
***C01B 31/02*** *(2006.01)*

(86) Numéro de dépôt international:
**PCT/FR2012/052840**

(87) Numéro de publication internationale:
**WO 2013/083931 (13.06.2013 Gazette 2013/24)**

(54) **PROCÉDÉ DE SYNTHÈSE AMÉLIORÉ DE NANOTUBES DE CARBONE SUR MULTI-SUPPORTS**

VERBESSERTES VERFAHREN ZUR HERSTELLUNG VON KOHLENSTOFFNANORÖHRCHEN AUF MEHREREN TRÄGERN

IMPROVED PROCESS FOR SYNTHESIZING CARBON NANOTUBES ON MULTIPLE SUPPORTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2011 FR 1161344**

(43) Date de publication de la demande:
**15.10.2014 Bulletin 2014/42**

(73) Titulaires:
• **Centre National de la Recherche Scientifique (CNRS)**
**75794 Paris Cedex 16 (FR)**
• **CentraleSupélec**
**91192 - Gif sur Yvette Cedex (FR)**

(72) Inventeurs:
• **BAI, Jinbo**
**F-92160 Antony (FR)**
• **DICHIARA, Anthony**
**77130 MONTEREAU-FAULT_YVONNE (FR)**
• **YUAN, Jinkai**
**33600 PESSAC (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**WO-A2-2010/066990**

• **CI L J ET AL: "Direct growth of carbon nanotubes on the surface of ceramic fibers", CARBON, ELSEVIER, OXFORD, GB, vol. 43, no. 4, 1 janvier 2005 (2005-01-01), pages 883-886, XP004738900, ISSN: 0008-6223, DOI: 10.1016/J.CARBON.2004.11.010**
• **CI L ET AL: "Novel micro/nanoscale hybrid reinforcement: Multiwalled carbon nanotubes on SiC particles", ADVANCED MATERIALS 20041118 WILEY-VCH VERLAG DE, vol. 16, no. 22, 18 novembre 2004 (2004-11-18), pages 2021-2024, XP002678899, DOI: DOI:10.1002/ADMA.200400379**
• **ZHAO Z-G ET AL: "The growth of multi-walled carbon nanotubes with different morphologies on carbon fibers", CARBON, ELSEVIER, OXFORD, GB, vol. 43, no. 3, 1 janvier 2005 (2005-01-01), pages 663-665, XP004694151, ISSN: 0008-6223, DOI: 10.1016/J.CARBON.2004.10.013**
• **VEEDU V P ET AL: "Multifunctional composites using reinforced laminae with carbon-nanotube forests", NATURE MATERIALS, NATURE PUBLISHING GROUP, LONDON, GB, vol. 5, 1 juin 2006 (2006-06-01), pages 457-462, XP002500845, ISSN: 1476-4660, DOI: 10.1038/NMAT1650**

**Description**

La présente invention se rapporte à un procédé de synthèse de nanotubes de carbone à la surface d'un matériau.

Plus précisément, l'invention a pour objet un procédé de synthèse de nanotubes de carbone (abrégé NTC) par dépôt chimique en phase vapeur (abrégé CVD) à la surface d'articles sous un courant de gaz inerte(s) utilisant (i) une source de carbone constituée d'acétylène et/ou de xylène, et (ii) un catalyseur comprenant du ferrocène, lesdits articles se présentant sous forme d'un mélange A (i) de particules et/ou fibres d'un matériau comprenant au moins un atome d'oxygène et (ii) de particules et/ou fibres d'un matériau choisi parmi les carbures et/ou comprenant au moins un atome de silicium.

La présente invention se rapporte également aux mélanges susceptibles d'être obtenus par ce procédé, les objets comprenant de tels mélanges ainsi que leurs utilisations dans tous les domaines d'application de nanotubes de carbone connus, notamment comme renfort par exemple pour la préparation des matériaux composites structuraux et fonctionnels. Dans la description ci-dessous, les références entre crochets [ ] renvoient à la liste des références présentées à la fin du texte.

Les nanotubes de carbone (NTC) suscitent un grand intérêt dans le monde de la recherche autant fondamentale qu'appliquée car leurs propriétés sont exceptionnelles à bien des égards. D'un point de vue mécanique, les NTC présentent à la fois une excellente rigidité comparable à celle de l'acier, tout en étant extrêmement légers (6 fois plus légers que l'acier). Les NTC présentent également une bonne conductivité thermique et électrique. Les NTC ont déjà été proposés comme renforts dans les matériaux composites.

Malgré les propriétés très intéressantes des NTC, à ce jour, leur utilisation pour renforcer les structures des matériaux composites s'est avérée peu satisfaisante. En effet, peu ou pas d'amélioration des propriétés mécaniques du matériau composite comme par exemple la résistance à la traction, à la flexion et à la compression, rigidité et durée de vie, allégement du poids spécifique, résistance à la corrosion n'a été obtenue. Par ailleurs, l'amélioration des propriétés de conduction électrique et/ou thermique a été insuffisante. Ceci peut s'expliquer par exemple par la détérioration des NTC ou de leurs propriétés lors de la dispersion des NTC, par la mauvaise dispersion ou alignement dans la matrice du matériau composite, par la résistance de contact élevée entre les NTC et/ou entre les NTC et leur environnement (matrice, substrats, etc.), par l'ajout de surfactants/dispersants, par une interface insuffisante entre les NTC et la matrice, ou encore par l'utilisation d'un taux élevé de NTC.

Une alternative consiste à utiliser des renforts conventionnels comme par exemple les particules et fibres de carbure de silicium (SiC), d'alumine ($Al_2O_3$), de fibres de carbone,.... à la surface desquels on synthétise des nanotubes de carbone (NTC).

Le document WO2010/066990 décrit en particulier la synthèse de NTC à la surface de renforts en utilisant une source de carbone constituée de xylène et acétylène et un catalyseur comprenant du ferrocène.

Cependant, la croissance, la densité et la morphologie des NTC ne sont pas très satisfaisantes et les rendements massiques avoisinent les 10%.

Il existe donc un réel besoin d'un procédé de synthèse de NTC à la surface d'un matériau, notamment un matériau pouvant être utilisé comme renfort, par exemple dans les matériaux composites, palliant les défauts, inconvénients et obstacles de l'art antérieur, qui soit industriellement réalisable et économiquement intéressant.

De plus, il existe un besoin réel de disposer d'un procédé de synthèse de NTC à la surface d'un matériau, notamment un matériau pouvant être utilisé comme renfort, par exemple dans les matériaux composites :

- qui puisse convenir aux différents types et géométries de matériaux/renforts à traiter (fibres courtes, longues, particules, etc.) ;
- qui permette une homogénéité notamment en diamètre, en densité et en arrangement des NTC déposés ;
- qui assure de bons rendements de synthèse des NTC ;
- qui permette de moduler les paramètres du procédé afin d'adapter l'homogénéité, le diamètre et la densité des NTC à l'application visée.
- la température de synthèse CVD adaptée à la nature des matériaux/renforts à traiter.

Il a ainsi été trouvé, de façon tout à fait surprenante, que le fait de mélanger d'abord des renforts micrométriques conformes à l'invention et ensuite de faire croître des NTC par CVD d'aérosol sur ces mêmes renforts mélangés, notamment des microparticules d'$Al_2O_3$ (alumine) et de SiC (carbure de silicium) permettait d'améliorer grandement le rendement de synthèse des NTC.

La présente invention concerne un procédé de synthèse de NTC par CVD à la surface d'articles, lesdits articles se présentant sous forme d'un mélange A (i) de particules et/ou fibres d'un matériau comprenant au moins un atome d'oxygène, avantageusement l'$Al_2O_3$ et (ii) de particules et/ou fibres d'un matériau choisi parmi les carbures et/ou comprenant au moins un atome de silicium, ledit procédé comprenant les étapes suivantes, réalisées sous un courant de gaz inerte(s), éventuellement en mélange avec de l'hydrogène :

(i) chauffage dans une enceinte réactionnelle dudit mélange A d'articles à une température comprise entre 400°C et 900°C ;

(ii) introduction dans ladite enceinte, d'une source de carbone constituée d'acétylène et/ou de xylène, et d'un catalyseur comprenant du ferrocène ;

(iii) exposition dudit mélange A, chauffé, à ladite source de carbone et audit catalyseur comprenant du ferrocène pendant une durée suffisante pour obtenir des NTC à la surface des articles formant ledit mélange A;

(iv) récupération d'un mélange B à l'issue de l'étape (iii), éventuellement après une étape de refroidissement, ledit mélange B étant formé du mélange A d'articles comprenant à leur surface des NTC ;

(v) éventuellement séparation des particules et/ou fibres d'$Al_2O_3$ comprenant à leur surface des NTC des particules et/ou fibres d'un matériau comprenant au moins un atome de silicium, ces dernières comprenant à leur surface des NTC.

Le procédé de l'invention, présente, entre autres, l'avantage d'optimiser les rendements massique et chimique globaux de synthèse de NTC par rapport à l'art antérieur. Il permet également de réaliser la synthèse de nanotubes " en continu " lorsque cela est souhaité et à des températures moins élevées que les procédés connus et sur des matériaux sur lesquels la croissance de NTC est en général difficilement reproductible et/ou difficilement homogène en diamètre des NTC et en densité (nombre de NTC par unité de surface). Il présente l'avantage de convenir tout particulièrement aux mélanges, selon l'invention, (i) de particules et/ou fibres d'un matériau comprenant au moins un atome d'oxygène, avantageusement l'$Al_2O_3$ et (ii) de particules et/ou fibres d'un matériau choisi parmi les carbures et/ou comprenant au moins un atome de silicium que les fibres soient courtes, longues ou continues.

Ces avantages, parmi d'autres, rendent le procédé de l'invention particulièrement intéressant notamment sur le plan industriel.

Selon un mode de réalisation dudit procédé, le matériau choisi parmi les carbures et/ou comprenant au moins un atome de silicium est choisi parmi le nitrure de silicium ($Si_3N_4$), le carbure de silicium (SiC), la silice ($Si_2O$), le TiC et le $B_4C$.

L'invention concerne aussi un mélange (appelé également mélange B) de (i) particules et/ou fibres d'un matériau comprenant au moins un atome d'oxygène, avantageusement l'$Al_2O_3$ et de (ii) particules et/ou fibres d'un matériau choisi parmi les carbures et/ou comprenant au moins un atome de silicium, lesdites particules et/ou fibres comprenant à leur surface des NTC, susceptibles d'être obtenus ou obtenus par un procédé tel que défini précédemment.

Enfin, l'invention est relative à l'utilisation d'un mélange (appelé également mélange B), tel que défini précédemment, susceptible d'être obtenu ou obtenu à l'issu du procédé tel que défini précédemment, comme renfort pour la préparation de matériaux composites structuraux et fonctionnels et/ou comme matériau (di)électrique et/ou dans le domaine de l'électrotechnique, de la microélectronique ou des télécommunications et/ou comme renfort pour la préparation de peintures et vernis.

Par "nanotube" on entend, au sens de la présente invention, une structure tubulaire à base de carbone, et qui possède un diamètre compris entre 0,5 et 100 nm. Ces composés appartiennent à la famille dite des "matériaux nanostructurés", qui présentent au moins une dimension caractéristique de l'ordre du nanomètre.

Dans le contexte de l'invention les termes "synthétiser", "déposer" ou encore "faire croître" peuvent être utilisés pour désigner le même phénomène, à savoir, synthétiser des NTC qui croissent directement à la surface du matériau/renfort.

Dans le cadre de l'invention, par "matériau composite" on entend un matériau constitué d'au moins deux constituants. L'un est "la matrice" qui assure la cohésion du composite. L'autre est "le renfort" ou "le renforcement" qui assure au composite des qualités/propriétés physiques et mécaniques plus intéressantes qu'avec la matrice seule.

Dans le cadre de la présente invention, les termes "matériau", "renfort" ou "matériau/renfort" sont indifféremment utilisés pour désigner un matériau comprenant au moins un atome d'oxygène, par exemple l'$Al_2O_3$ et un matériau choisi parmi les carbures et/ou comprenant au moins un atome de silicium, tel que par exemple, le nitrure de silicium ($Si_3N_4$), le carbure de silicium (SiC), la silice ($Si_2O$), le TiC et le $B_4C$, lesdits matériaux pouvant être utilisés pour assurer, par exemple, aux matériaux composites des propriétés physiques et mécaniques comme par exemple la résistance à la traction, à la flexion et à la compression, rigidité et durée de vie, résistance au frottement et à l'usure, allégement du poids spécifique, résistance à la corrosion, conductivité électrique et thermique et blindage des ondes électromagnétiques.

Dans le contexte de l'invention, une fibre est dite "longue ou continue" lorsque sa longueur est égale ou supérieure à 20 cm et une fibre est dite courte lorsque sa longueur est inférieure à 20 cm. Le procédé peut être similaire lorsqu'il s'agit de synthétiser des NTC à la surface des particules et des fibres courtes.

Au sens de la présente description, le terme " surface spécifique " se réfère à la surface spécifique BET, telle que déterminée par adsorption d'azote, selon la méthode bien connue dite de BRUNAUER - EMMET - TELLER qui est décrite dans The journal of the American Chemical Society, volume 60, page 309 51938 et correspondant à la norme internationale ISO 5794/1.

L'invention va maintenant être décrite plus en détails.

Les caractéristiques améliorées du procédé de l'invention, à savoir augmentation du rendement massique, augmentation du diamètre des NTC et augmentation de la densité des NTC peuvent être expliquées par la mise en oeuvre de la combinaison spécifique : acétylène, xylène, ferrocène et mélange de (i) de particules et/ou fibres d'$Al_2O_3$ et (ii) de particules et/ou fibres d'un matériau comprenant au moins un atome de silicium.

La présente invention met en oeuvre un mélange A (i) de particules pleines ou creuses, d'un matériau comprenant au moins un atome d'oxygène, avantageusement l'$Al_2O_3$, et/ou de fibres d'un matériau comprenant au moins un atome d'oxygène, avantageusement l'$Al_2O_3$ et (ii) de particules d'un matériau choisi parmi les carbures et/ou comprenant au moins un atome de silicium, creuses ou pleines, et/ou fibres d'un matériau choisi parmi les carbures et/ou comprenant au moins un atome de silicium. Avantageusement, le matériau comprenant au moins un atome de silicium est choisi parmi le nitrure de silicium ($Si_3N_4$), le carbure de silicium (SiC) et la silice ($Si_2O$) et le carbure est choisi parmi le TiC et le $B_4C$.

Le rapport en masse du mélange A de (particules et/ou fibres d'un matériau comprenant au moins un atome d'oxygène, avantageusement l'$Al_2O_3$)/(particules et/ou fibres d'un matériau choisi parmi les carbures et/ou comprenant au moins un atome de silicium) peut être compris entre 10/90 et 90/10, avantageusement entre 25/75 et 75/25, mieux encore entre 40/60 et 60/40.

Lorsqu'il s'agit de fibres, ces fibres peuvent avoir un diamètre de 1 à 100 $\mu$m, avantageusement de 4 à 50 $\mu$m. Lorsqu'il s'agit de particules, ces particules peuvent avoir un diamètre de 0,1 à 100 $\mu$m, avantageusement de 0,2 et 40 $\mu$m.

Avantageusement, le mélange A est un mélange de particules d'$Al_2O_3$ et de particules de carbure de silicium (SiC).

Le catalyseur peut comprendre exclusivement du ferrocène. Il peut également comprendre du ferrocène, éventuellement en mélange avec un autre catalyseur choisi dans le groupe organométallique comprenant le phtalocyanine, le pentacarbonyle de fer.

Selon un mode de réalisation, lorsque 0,1 à 0,5 g de mélange A sont mis en oeuvre, on introduit 0,01 à 0,3 g/mL de ferrocène dans xylène et/ou acétylene.

Le débit xylène-ferrocène peut être de 0,05 à 0,5 mL/min (avantageusement 0,2 mL/min) et le débit d'acétylène peut être de 0,01 à 0,1 L/min (avantageusement 0,04 L/min).

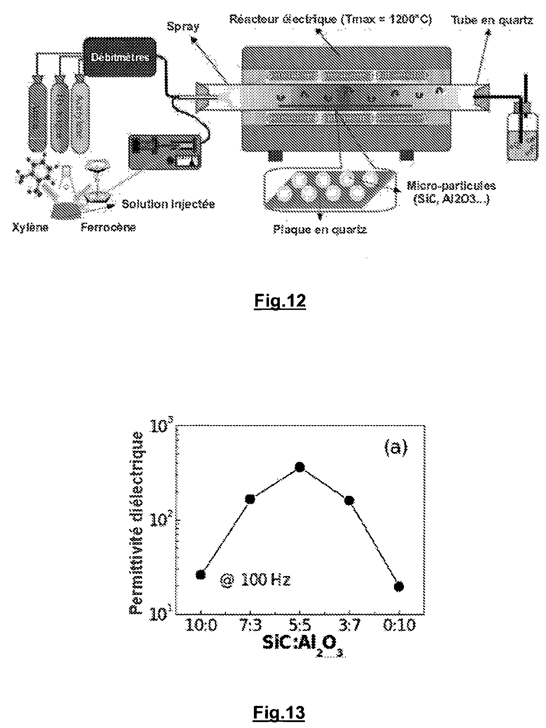

L'enceinte réactionnelle peut être tout dispositif permettant une introduction simultanée et contrôlée des précurseurs chimiques, muni d'au moins un four avec un système de circulation des gaz et d'au moins un débitmètre gaz et liquide permettant de mesurer et de contrôler les débits des gaz et des liquides. Un exemple de dispositif pouvant convenir à la mise en oeuvre du procédé de l'invention est indiqué dans la figure 12.

Selon un mode de réalisation dudit procédé, la température de chauffage de l'étape (i) est comprise entre 400 et 900°C, avantageusement entre 650 et 900°C si on vise un bon rendement ou entre 400-550°C si une faible température de synthèse/traitement est nécessaire.

Dans le cas de températures de synthèse de NTC inférieures à 600°C, le dépôt de NTC s'effectuent uniquement sur les particules et/ou les fibres du mélange A. En effet, dans ces conditions, aucun dépôt carboné n'est observé ni sur le tube en quartz, ni sur la plaque de quartz supportant le mélange A.

Dans l'étape (ii), l'acétylène peut être introduit dans l'enceinte réactionnelle sous forme de gaz en une quantité supérieure à 0 et allant jusqu'à 20% en volume du gaz total avec une vitesse linéaire de $5,0 \times 10^{-6}$ à $1,0 \times 10^{-1}$ m/s. Il peut encore être introduit par exemple en quantité allant de 0,1 à 10% en volume du gaz total.

On entend par "vitesse linéaire", la distance parcourue par l'acétylène en 1 seconde. La vitesse linéaire se détermine en fonction du débit de l'acétylène et du volume de l'enceinte réactionnelle. Par exemple, pour un tube de diamètre intérieur de 45 mm, un débit de gaz à 1 l/min correspond à une vitesse linéaire de 0,0095 m/s. Ceci est vrai pour tous les gaz utilisés dans le cadre de la présente invention.

Dans l'étape (ii), le xylène est introduit dans l'enceinte réactionnelle sous forme de liquide éventuellement en mélange avec le ferrocène. Lorsque le ferrocène est introduit par vaporisation, le xylène est introduit seul. Le système utilisé pour l'introduction de xylène, seul ou en mélange avec le ferrocène, peut être tout système permettant son injection par exemple un atomiseur, un vaporisateur, un nébulisateur, un aérobrumisateur.

Le débit du xylène, seul ou en mélange avec le ferrocène, peut être compris entre 5 et 40ml/h ou 0,05 à 0,5 ml /min, par exemple entre 10 et 25 ml/h pour un tube CVD de diamètre 45 mm environ.

Selon un mode de réalisation, dans l'étape (ii), le xylène peut être introduit dans l'enceinte réactionnelle sous forme de micro gouttelettes via un spray, éventuellement mélangé avec le ferrocène, le débit de liquide étant contrôlé à 0,2 ml/min, ou le débit de xylène étant contrôlé de 0,1 à 0,7 ml/min.

Un avantage d'une introduction indépendante du ferrocène et de la source de carbone est la possibilité de choisir le moment de l'introduction de l'un par rapport à l'autre, tandis que le contrôle du ratio est possible par l'intermédiaire de la concentration de la solution. Selon un mode de réalisation particulier de l'invention, le xylène est introduit sous forme liquide en mélange avec le ferrocène. Ceci permet d'apporter une solution technique intéressante pour introduire le ferrocène, en le dissolvant dans le xylène liquide, pour une synthèse en présence d'acétylène.

La teneur en ferrocène dans ce mélange peut être comprise entre 0,001 à 0,3 g de ferrocène/ml de xylène, par exemple entre 0,001 et 0,2 g de ferrocène/ml de xylène, plus particulièrement entre 0,01 et 0,1 g de ferrocène/ml de xylène.

Comme indiqué précédemment, dans l'étape (ii) le ferrocène peut également être introduit seul dans l'enceinte. Dans ce cas, préalablement à son introduction, le ferrocène est vaporisé et c'est la vapeur de ferrocène qui est introduite dans l'enceinte réactionnelle par exemple par un flux de gaz, par exemple d'argon éventuellement en mélange avec de l'hydrogène.

Dans l'étape (iii), le mélange A peut ensuite être exposé à la source de carbone et au catalyseur pendant une durée de 1 à 120 minutes. Cette durée peut encore être de 5 à 90 minutes, par exemple de 5 à 30 minutes. L'homme du métier saura adapter cette durée selon d'une part la taille et la densité des NTC recherchées et d'autre part le matériau et le risque de dégradation dudit matériau lors du traitement.

Dans l'étape (iv), le mélange B obtenu à l'issue de l'étape (iii), qui comprend des particules et/ou des fibres comprenant à leur surface des NTC, peut être récupéré (i) sans refroidissement préalable, par exemple à la sortie du réacteur lorsque la synthèse est " en continu ", ou (ii) après refroidissement à une température de, par exemple, 15 à 100°C.

A l'issue de l'étape (iv), le matériau comprenant à sa surface des NTC peut être utilisé tel quel dans les différentes applications envisagées.

Toutes les étapes (i) à (iv) peuvent être réalisées sous un courant de gaz inerte(s), éventuellement en mélange avec de l'hydrogène avec un rapport hydrogène/gaz inerte(s) de 0/100 à 50/50, par exemple de 0/100 à 40/60. Les gaz inertes peuvent être choisis dans le groupe comprenant l'hélium, le néon, l'argon, l'azote et le krypton. La mise en oeuvre des dispositions qui précèdent permet, en contrôlant la croissance des NTC à la surface du matériau/renfort, d'améliorer notamment les propriétés d'interface entre les NTC et les renforts et les propriétés des composites en assurant une bonne dispersion des NTC dans la matrice.

Le procédé de synthèse des NTC selon l'invention a l'avantage de pouvoir être mis en oeuvre en continu. Par procédé de synthèse en continu, on entend un procédé dans lequel l'introduction des matériaux/renforts à la surface desquels les NTC sont à synthétiser, ne nécessite pas l'arrêt de l'équipement ni l'interruption de la production. Un procédé en continu est particulièrement intéressant dans le cas où le matériau à traiter est une fibre longue telle que définie précédemment ou dans le cas de particules/ fibres courtes avec un convoyeur ou un lit fluidisé.

Le mélange B de particules et/ou fibres selon l'invention comprenant à leur surface des NTC, obtenu ou susceptible d'être obtenu par un procédé selon l'invention peut être sous forme de fibres courtes (avec une longueur inférieure à 20 cm), de fibres longues ou continues (avec une longueur égale ou supérieure à 20 cm), et/ou sous forme de particules. Lesdites particules et/ou fibres obtenues selon le procédé de l'invention possède en leur surface des NTC et ce, avec une bonne et reproductible homogénéité en diamètre et en densité (exprimée notamment en nombre de NTC par microm$^2$). Ainsi, le nombre de NTC par microm$^2$ à la surface desdites particules et/ou fibres peut être compris entre 5 et 200 par microm$^2$, par exemple, entre 30 et 60 par microm$^2$.

Généralement, le mélange B de l'invention présente une prise de masse, due au dépôt des NTC, comprise entre 0,2 et 80% par rapport à la masse du matériau de départ.

Lorsque le mélange B de l'invention est exclusivement sous forme de fibres, la prise de masse est plus particulièrement comprise entre 0,2 et 10%, par exemple entre 0,5 et 5%, par rapport à la masse du mélange A de départ.

Lorsque le mélange B de l'invention est exclusivement sous forme de particules, la prise de masse est plus particulièrement comprise entre 5 et 50%, par exemple entre 10 et 40% par rapport à la masse du mélange A de départ.

Les particules et/ou fibres conformes à l'invention peuvent présenter également une surface spécifique supérieure à 150 m$^2$/g, par exemple comprise entre 150 et 2000 m$^2$/g, par exemple entre 200 et 1000 m$^2$/g.

Les mélanges B selon la présente invention de (i) particules et/ou fibres d'un matériau comprenant au moins un atome d'oxygène, avantageusement l'Al$_2$O$_3$, lesdites particules et/ou fibres comprenant à leur surface des NTC et de (ii) particules et/ou fibres d'un matériau choisi parmi les carbures et/ou d'un matériau comprenant au moins un atome de silicium, lesdites particules et/ou fibres comprenant à leur surface des NTC, peuvent être utilisés dans toutes les applications où de tels matériaux/renforts sont mis en oeuvre. Ils sont plus particulièrement utilisés comme renforts pour la préparation de matériaux composites, notamment dans des domaines où leurs propriétés électriques sont recherchées et/ou dans des domaines où leurs propriétés mécaniques sont recherchées et/ou dans des domaines où leurs propriétés thermiques sont recherchées. Selon un mode de réalisation, le mélange selon l'invention comprend, en outre, un polymère, un métal ou un matériau composite.

Les matériaux composites comprenant des mélanges B selon l'invention, peuvent être destinés par exemple à l'industrie de l'automobile, à l'industrie de l'aéronautique et spatiale, à l'industrie de la construction et du textile, aux équipements sportifs, ou encore aux équipements électroniques. Ils peuvent en outre être utilisés pour la préparation de tissus ou de vêtements à haute performance. Ils peuvent également être utilisés pour la préparation de composants électrochimiques, notamment d'électrode à large surface pour sa meilleure résistance à la corrosion.

Ils peuvent permettre d'obtenir la structure particulière de matériaux de filtration et/ou de dépollution notamment de l'air, des eaux usées, de gaz à haute température.

Compte tenu de sa surface spécifique élevée, le matériau selon l'invention peut être utilisé pour la préparation de supports de catalyseur, par exemple pour la catalyse hétérogène.

Enfin, lorsque le matériau de l'invention n'est pas sous forme de fibre longue telle que définie précédemment, il peut être utilisé comme renfort pour la préparation de peintures et vernis.

Le procédé selon l'invention permet non seulement d'augmenter de manière significative l'efficacité de la croissance de NTC sur des microparticules ou des microfibres, par CVD d'aérosol en vue d'applications industrielles, mais engendre également un gain de temps et une mise en oeuvre de températures plus faibles dans l'élaboration de renforts nano/micro hybrides pour des applications dans les matériaux composites. L'utilisation de ces nano/micro hybrides comme renforts permettent d'améliorer grandement les propriétés de divers matériaux composites, par exemple diélectriques ou conducteurs.

D'autres avantages pourront encore apparaître à l'homme du métier à la lecture des exemples ci-dessous, illustrés par les figures annexées, donnés à titre illustratif.

Brève description des figures

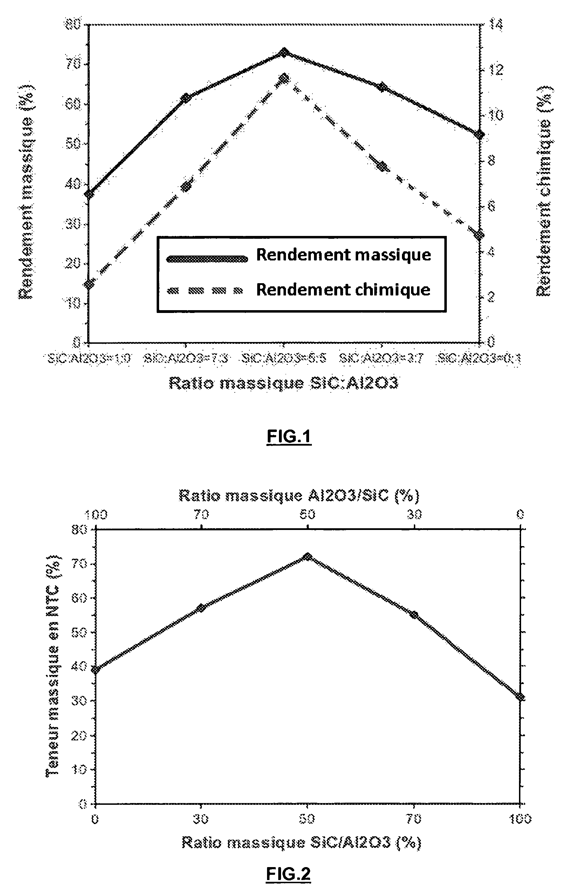

La **figure 1** représente les rendements massique et chimique globaux de synthèses de NTC effectuées dans les mêmes conditions à 600°C pour différents mélanges de micro-particules d'$Al_2O_3$ (pureté 99,8% comprenant 800ppm de $SiO_2$ et 600ppm de $Na_2O$) et de microparticules de SiC, lesdites microparticules ayant un diamètre moyen entre 3 et 7 micromètres.

La **figure 2** représente le pourcentage massique de NTC dans les mélanges de microparticules d'$Al_2O_3$ (pureté 99,8% comprenant 800ppm de $SiO_2$ et 600ppm de $Na_2O$) et de microparticules de SiC, lesdites microparticules ayant un diamètre moyen entre 3 et 7 micromètres, en fonction du pourcentage de SiC/ $Al_2O_3$.

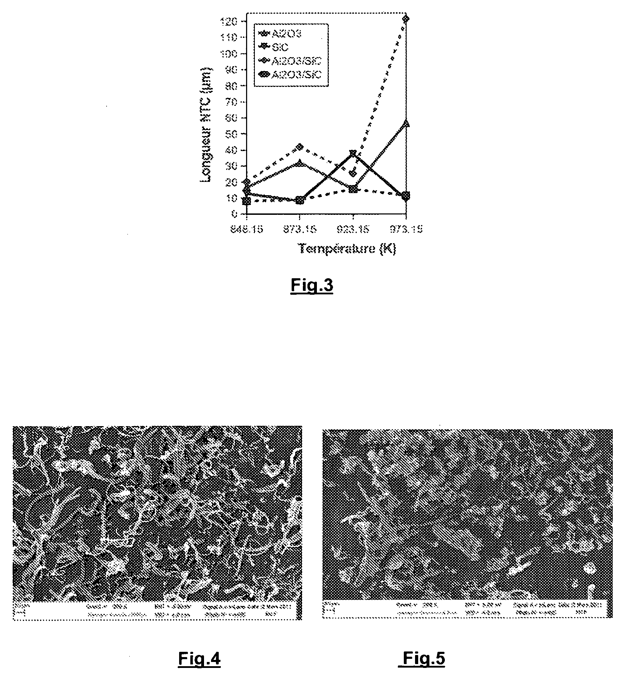

La **figure 3** représente la longueur des NTC en fonction de la température pour des substrats non conformes à l'invention (substrat SiC seul ou $Al_2O_3$ seul) et pour des substrats conformes à l'invention.

Les **figures 4 et 5** représentent les photographies prises au microscope électronique à balayage respectivement (i) d'un mélange de microparticules de diamètres moyen compris entre 3 et 7 micromètres d'$Al_2O_3$ et de SiC (50/50) et (i) de microparticules de $Al_2O_3$ seul après avoir réalisé le procédé de synthèse des NTC selon l'invention à une température de 700°C.

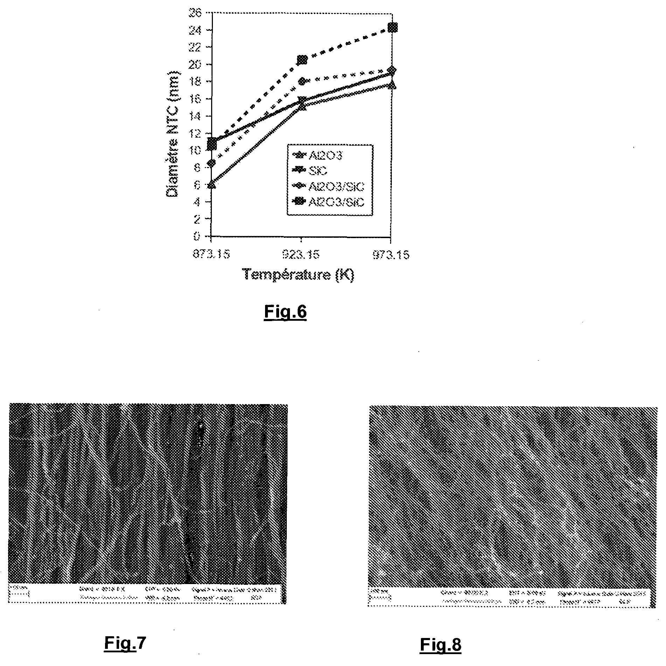

La **figure 6** représente le diamètre des NTC en fonction de la température pour des substrats non conformes à l'invention (substrat SiC seul ou $Al_2O_3$ seul) et pour des substrats conformes à l'invention.

Les **figures 7 et 8** représentent les photographies prises au microscope électronique à balayage respectivement (i) d'un mélange de microparticules de diamètres moyen compris entre 3 et 7 micromètres d'$Al_2O_3$ et de SiC (50/50) et (i) de microparticules de $Al_2O_3$ seul après avoir réalisé le procédé de synthèse des NTC selon l'invention à une température de 650°C.

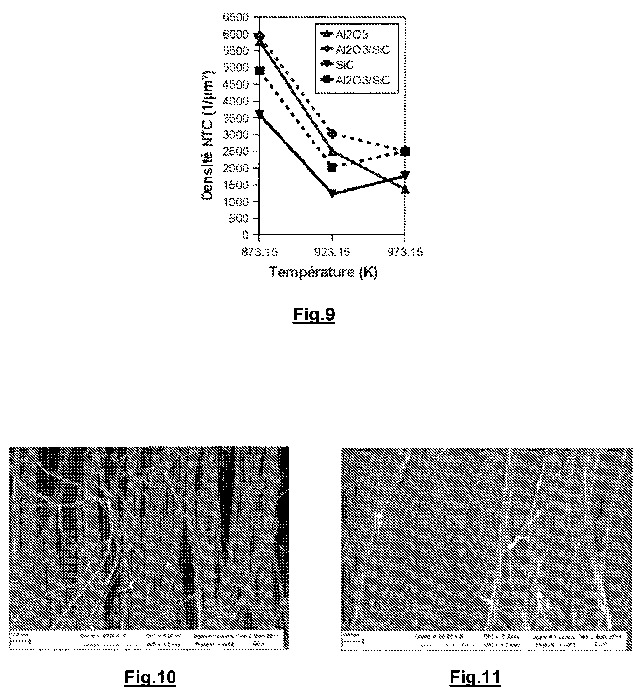

La **figure 9** représente la densité des NTC en fonction de la température pour des substrats non conformes à l'invention (substrat SiC seul ou $Al_2O_3$ seul) et pour des substrats conformes à l'invention.

Les **figures 10 et 11** représentent les photographies prises au microscope électronique à balayage respectivement (i) d'un mélange de microparticules de diamètres moyen compris entre 3 et 7 micromètres d'$Al_2O_3$ et de SiC (50/50) et (i) de microparticules de SiC seul après avoir réalisé le procédé de synthèse des NTC selon l'invention à une température de 650°C.

La **figure 12** représente un dispositif de synthèse des NTC conforme à l'invention.

La **figure 13** représente la permittivité diélectrique d'un composite à matrice PVDF renforcé par des charges hybrides ($Al_2O_3$+SiC) en fonction du ratio $Al_2O_3$/SiC des mélanges de micro-particules d'$Al_2O_3$ (pureté 99,8% comprenant 800ppm de $SiO_2$ et 600ppm de $Na_2O$) et de microparticules de SiC, lesdites microparticules ayant un diamètre moyen entre 3 et 7 micromètres.

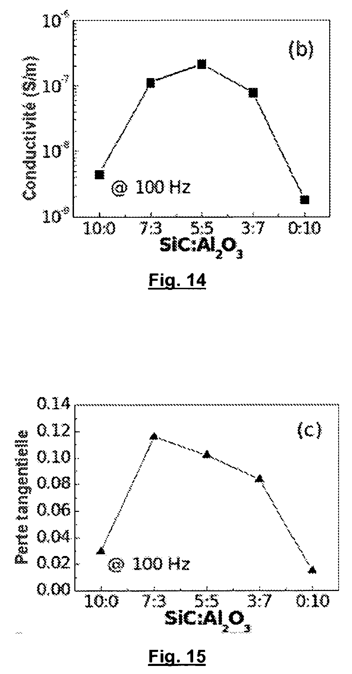

La **figure 14** représente la conductivité AC d'un composite à matrice PVDF renforcé par des charges hybrides ($Al_2O_3$+SiC) en fonction du ratio $Al_2O_3$/SiC des mélanges de micro-particules d'$Al_2O_3$ (pureté 99,8% comprenant 800ppm de $SiO_2$ et 600ppm de $Na_2O$) et de microparticules de SiC, lesdites microparticules ayant un diamètre moyen entre 3 et 7 micromètres.

La **figure 15** représente la perte tangentielle en fonction d'un composite à matrice PVDF renforcé par des charges hybrides ($Al_2O_3$+SiC) en fonction du ratio $Al_2O_3$/SiC des mélanges de micro-particules d'$Al_2O_3$ (pureté 99,8% comprenant 800ppm de $SiO_2$ et 600ppm de $Na_2O$) et de microparticules de SiC, lesdites microparticules ayant un diamètre moyen entre 3 et 7 micromètres.

**EXEMPLES :**

Il est rappelé la conversion des degrés Celsius en kelvins : K = °C + 273,15 et des degrés kelvins en degrés Celsius : °C = K - 273,15.

**EXEMPLE 1 : Préparation de mélange de matériaux recouverts de NTC**

**1/ Montage utilisé**

Le montage (figure 12) est réalisé de manière à contrôler les injections simultanées des précurseurs chimiques et les débits de gaz dans un réacteur du type tube de quartz, dont le chauffage est assuré par un four thermique à résistance commercialisé par la société Carbolite équipé d'un programmeur de température.

Les débits de gaz (acétylène ($C_2H_2$), argon (Ar), hydrogène ($H_2$)) sont mesurés et contrôlés par des débitmètres massiques numériques commercialisés par les sociétés Bronkhorst France et SERV INSTRUMENTATION.

Les débits de précurseurs liquides (xylène, mélange xylène-ferrocène) sont contrôlés avec un mécanisme type pousse seringue médical (commercialisé par la société Razel ou par Fisher Bioblock scientific) ou mélangeur équipé d'un débitmètre liquide(commercialisés par les sociétés Bronkhorst France et SERV INSTRUMENTATION).

Le ferrocène est injecté dissout dans le xylène ou bien directement vaporisé et injecté par convection au moyen d'un gaz porteur neutre comme par exemple l'argon, grâce à un dispositif adapté.

Dans les exemples, lorsque le ferrocène est directement vaporisé, la vaporisation est effectuée dans une chambre de vaporisation en verre (ballon fond rond tricols 100 ml commercialisé par Fisher bioblock chauffé), la température de vaporisation est comprise entre 200 et 400°C ; le gaz porteur est l'argon avec un débit de 0,1 à 0,4 l/min. Plus généralement, pour la vaporisation du ferrocène, un dispositif extérieur au réacteur ou enceinte réactionnelle permet de chauffer le ferrocène afin de le vaporiser. La vapeur est alors injectée par convection : un flux de gaz neutre balaie la chambre de vaporisation.

Pour une température donnée, la quantité de ferrocène vaporisée est proportionnelle au débit du gaz neutre. En prenant en compte la pression de vapeur du ferrocène dans la chambre de vaporisation (P exprimée en mm Hg), la quantité de ferrocène peut être calculée par la relation: Log P (mm Hg) = 7,615 - 2470 / T (°K)

Les mélanges A utilisés sont des mélanges de micro-particules sphériques d'alumine ($\mu$-$Al_2O_3$, de 99.8 % de pureté comprenant 800 ppm de SiO2 et 600 ppm de Na2O) et de micro-particules de carbure de silicium de taille moyenne comprise entre 3-7 $\mu$m. Ces particules sont commercialisées par la société Performance Ceramics.

**2/ Synthèse de NTC par CVD d'aérosol sur des particules d'alumine (Al2O3) et/ou de SiC.**

Le montage utilisé est celui de la figure 12. La synthèse des NTC a été effectuée sur des mélanges conformes à l'invention de particules d'alumine et de SiC définies ci-dessus et sur des particules d'alumine seules définies ci-dessus ou des particules de SiC seules définies ci-dessus, à titre de comparatifs.

Les conditions opératoires sont les suivantes :

- débit de gaz = $H_2$ 0,3 l/min, Ar 0,7 l/min, $C_2H_2$ 0,04 l/min,
- concentration de ferrocène dans xylène : 0,05 g/ml et débit liquide à 12 ml/h
- temps = 10 min, température = 575°C

Le dispositif mis en oeuvre pour réaliser cette synthèse est composé d'une enceinte cylindrique en quartz de 110 cm de long pour 45 mm de diamètre chauffée entre 500 et 900°C par un four horizontal de 60 cm de long. Les micro-particules n'ayant subi aucun traitement préalable sont mélangées puis déposées de façon homogène pour une masse donnée sur une plaque en quartz d'une quinzaine de cm de long. L'ensemble est alors placé dans le tube au centre du four et porté à température sous atmosphère inerte (mélange d'argon et d'hydrogène). Le débit total des gaz présents dans le réacteur est maintenu constant 1 L/min à l'aide de débitmètres électroniques de type Brook Smart. Une solution de ferrocène ($Fe(C_5H_5)_2$) diluée dans du xylène ($C_8H_{10}$) dont la concentration est variable de 0.01 à 0.3 g/mL va servir à la fois de précurseurs catalytique (fer) et de source de carbone. Cette solution est ensuite injectée sous forme de spray dans le tube à l'aide d'un pousse seringue électronique dont le débit peut être ajusté manuellement. Enfin, un autre hydrocarbure, l'acétylène ($C_2H_2$), est également injecté dans le système à des débits contrôlés de 0.01 à 0.1 L/min. La croissance des nanotubes dure entre 5 et 50 min pour chaque échantillon. Pour finir, le système est refroidit à température ambiante sous atmosphère inerte (argon), afin de collecter les échantillons.

## 3/ RÉSULTATS

### 3.1. Rendements

Les rendements massique et chimique globaux ont été calculés. Le calcul se fait selon les équations ci-dessous.

- Le rendement massique global fait référence au rapport entre la masse de nanotubes synthétisés sur la masse totale des hybrides produits (nanotubes + micro-particules), tel que :

$$R_{mass} = \frac{masse\ nanotubes}{masse\ totale\ hybrides\ [nanotubes + microparticules]}$$

- Le rendement chimique global est le taux de conversion des réactifs introduits dans le dispositif (acétylène, ferrocène et xylène) en produits synthétisés (carbonés et métalliques). La formule de ce taux de conversion est la suivante :

$$R_{chim} = \frac{masse\ totale\ produits}{masse\ totale\ réactifs} \times 100$$

- Bien que le phénomène observé soit reproductible sur une large gamme de température (de 400 à 900°C), les rendements massiques et chimiques ont été calculés pour différents mélanges de micro-particules de ratio massique SiC/Al$_2$O$_3$ de 1/0 (comparatif), 7/3, 5/5, 3/7, 0/1 (comparatif) dans les mêmes conditions de synthèse à 600°C.
- Les résultats, exposés sur la **figure 1,** ont fait l'objet d'une moyenne effectuée sur deux séries de synthèses identiques par soucis de reproductibilité.

On remarque tout d'abord que les valeurs de rendement chimique global sont relativement faibles compte tenu du fait que tout l'aérosol n'est pas entièrement consommé au cours de la réaction et qu'une partie se retrouve dans les pièges en sortie de réacteur. Ces valeurs ont néanmoins tendance à augmenter avec la température puisque plus d'aérosol pourra alors être consommé. Ainsi, si l'on compare ces données avec des résultats de la littérature obtenus dans des conditions de CVD d'aérosol similaires mais sur d'autres substrats, on note que pour des procédés optimisés à des températures plus élevées les rendements chimiques globaux ne dépassent pas les 8 % (2 % à 800°C, 7,8 % à 850°C et 4,6 % à 900°C).

En outre, on remarque une augmentation significative du rendement massique global lorsque les substrats micro-particulaires d'alumine et de carbure de silicium sont mélangés par rapport aux comparatifs dont le ratio massique SiC/ Al$_2$O$_3$ est 1/0 ou 0/1.

En effet, le rendement massique a presque doublé par rapport aux comparatifs tandis que le rendement chimique a lui quasiment triplé !

D'une manière générale, une augmentation moyenne du rendement massique supérieure à 25% est obtenue par rapport aux substrats dont le ratio massique SiC/Al$_2$O$_3$ est 1/0 ou 0/1, quelque soient les conditions de CVD employées.

### 3.2. Longueur des NTC

Si l'on compare la croissance de NTC sur substrat dont le ratio massique SiC/Al$_2$O$_3$ est 0/1 à la croissance des NTC sur substrats comprenant un mélange de particules d'alumine et de carbure de silicium, on constate que les nanotubes synthétisés sur substrat comprenant un mélange de particules d'alumine et de carbure de silicium sont globalement plus longs que ceux synthétisés sur alumine seule. Les nanotubes ayant poussés sur la portion alumine du mélange alumine/carbure de silicium sont en moyenne 20 $\mu$m plus long que ceux ayant poussé sur un substrat constitué uniquement de micro-particules d'alumine dans des conditions de synthèse en CVD identiques. L'ajout de particules de SiC a donc un effet synergique favorable à la croissance de NTC sur alumine puisqu'il permet d'augmenter la vitesse de croissance des NTC sur alumine d'environ 72% en dans les conditions de synthèse selon l'invention.

La **figure 3** ci-après nous montre l'évolution de la longueur des nanotubes en fonction de la température pour différents substrats considérés avec en traits pleins les comparatifs (substrat constitué uniquement de microparticules d'alumine et substrat constitué uniquement de microparticules de carbure de silicium) et en pointillés les mélange B selon l'invention.

Les images MEB des **figures 4 et 5,** à la même échelle et prises à l'issue d'un procédé de synthèse de NTC dans les mêmes conditions opératoires (700°C), permettent de visualiser la différence de croissance des nanotubes pour un mélange de particules alumine/SiC : 50/50 conforme à l'invention dans le cas de la **figure 4** et pour un substrat de microparticules d'alumine, non conforme à l'invention dans le cas de la **figure 5.**

3.3. Diamètre des NTC

On observe une augmentation du diamètre des nanotubes lorsque les substrats sont des substrats comprenant un mélange de particules d'alumine et de carbure de silicium par rapport au diamètre moyen des NTC lorsque le substrat est constitué de particules d'alumine ou de particules de SiC.

Le diamètre est ainsi plus important en moyenne de 18% sur les particules d'alumine et de 21% sur les particules de carbure de silicium dans un mélange B selon l'invention comparé respectivement au diamètre moyen de NTC sur substrat constitué uniquement de particules d'alumine et sur substrat constitué uniquement de particules de SiC. Par ailleurs, la **figure 6** montre que cette augmentation est significative sur l'ensemble de la gamme de température considérée.

Les images MEB des **figures 7 et 8,** à la même échelle et prises à l'issue d'un procédé de synthèse de NTC dans les mêmes conditions opératoires (650°C), permettent de visualiser la différence de diamètres des nanotubes pour un mélange de particules alumine/SiC : 50/50 conforme à l'invention dans le cas de la **figure 7** et pour un substrat de microparticules d'alumine, non conforme à l'invention, dans le cas de la **figure 8.**

3.4. Densité des NTC

Pour calculer la densité surfacique en nanotubes des échantillons, la densité linéique moyenne sur 1 $\mu$m de longueur de NTC a d'abord été déterminée puis cette densité linéique a ensuite été élevée au carré. Ainsi, on remarque que la densité moyenne de NTC sur particules de SiC et d'alumine mélangées augmentent respectivement de **43%** et de **18%** lorsque les substrats sont mélangés et conformes à l'invention par rapport à respectivement (i) la densité moyenne de NTC sur un substrat constitué uniquement de particules de SiC, et (ii) la densité moyenne de NTC sur un substrat constitué uniquement de particules d'alumine.

Par ailleurs, la **figure 9** montre que cette augmentation de densité est de manière générale plus importante pour le SiC que pour l'alumine et ce sur l'ensemble de la gamme de température considérée.

Les images MEB des **figures 10 et 11,** à la même échelle et prises à l'issue d'un procédé de synthèse de NTC dans les mêmes conditions opératoires (650°C), permettent de visualiser la différence de densité des nanotubes pour un mélange de particules alumine/SiC : 50/50 conforme à l'invention dans le cas de la **figure 10** et pour un substrat de microparticules de carbure de silicium, non conforme à l'invention, dans le cas de la **figure 11.**

**4/ CONCLUSION DE L'EXEMPLE 1**

La croissance simultanée de NTC sur deux types de substrats différents et mélangés choisi parmi les fibres d'alumine, les particules d'alumine, les fibres d'un matériau comprenant au moins un atome de silicium et les particules d'un matériau comprenant au moins un atome de silicium (par exemple un mélange de micro-particules d'alumine et de carbure de silicium), présente des effets bénéfiques significatifs sur :

(i) le rendement du procédé de croissance de NTC par CVD d'aérosol (Augmentation moyenne du rendement massique quelque soient les conditions de synthèse supérieure à 25%) ;
(ii) le diamètre des NTC (Augmentation moyenne d'environ 20%) ;
(iii) la longueur des NTC (NTC environ 20 $\mu$m plus longs en moyenne sur alumine et 5 $\mu$m plus court en moyenne sur SiC) ;
(iv) la vitesse de croissance (Augmentation de 72% en moyenne de la vitesse de croissance des NTC sur alumine) et ;
(v) la densité des NTC (Augmentation de 43% en moyenne de la densité des NTC sur carbure de silicium et de 18% en moyenne sur alumine).

Il y a donc un véritable effet synergique des deux substrats qui permettent d'obtenir tous ces avantages. En plus de son avantage indéniable sur les procédés de synthèses de NTC en grande quantité, la présente invention confère également un bénéfice significatif à la réalisation de nouveaux matériaux composites qui peuvent servir divers types d'applications.

**EXEMPLE 2 : Préparation de matériaux composites diélectriques**

Des compositions comprenant (i) un mélange de particules recouvertes de NTC (5 mélanges différents sont testés) selon l'invention et un polymère PVDF ont été préparées en employant une méthode d'extrusion permettant d'assurer une dispersion uniforme du mélange de particules recouvertes de NTC dans ledit polymère.

Tout d'abord, le mélange de particules recouvertes de NTC, préparé tel que défini précédemment, et la poudre PVDF sont dispersés dans du N, N-dimethylformamide (abrégé DMF). Le mélange résultant est ensuite traité par agitation magnétique une nuit de manière à obtenir une solution précurseur de composite.

La solution précurseur de composite, obtenue précédemment, est ensuite appliquée sur des particules de céramique qui sont ensuite traitées thermiquement à 150°C pendant 2 h.

Ensuite, les particules de composites résultantes sont à nouveaux mélangées dans un microcompounder co-rotatif, conique, bi-vis (Micro 5cm3, compounder à double Vis, DSM) à 200°C, pendant plus de 10 minutes et à une vitesse d'agitation de 20 trs/min sous atmosphère d'Argon. On obtient donc 5 échantillons de particules de composites dont la composition initiale du mélange de particules recouvertes de NTC est différente et définie dans le tableau 1 ci-dessous. Les propriétés de permittivité diélectrique, de conductivité AC et de perte tangentielle sont exprimées dans les figures respectivement 13, 14 et 15 en fonction du ratio particules de carbure de silicium/alumine du mélange d'origine, lesdites particules étant recouvertes de NTC.

Des blocs d'épaisseur 1,5 mm ont été préparés par injection moulage de composites (Micro 5 cm3 Injection Molder, DSM) utilisant une pression de 1,6 MPa pendant 1 minute, tandis que la température du moule a été maintenue à 60°C. Alors, la température est diminuée de 60°C jusqu'à température ambiante.

Le **tableau 1** ci-dessous reprend les caractéristiques de chaque échantillon 1-5 réalisé. Les résultats sont illustrés sur les figures 13-15.

### TABLEAU 1

| échantillon | Ratio SiC/Al$_2$O$_3$ | Quantité du mélange de particules SiC/ Al$_2$O$_3$ | Quantité de Céramique (g) | Quantité de CNTs (g) | Quantité PVDF (g) |
|---|---|---|---|---|---|
| 1 | 10/0 | 0,080 | 0,05 | 0,030 | 5,00 |
| 2 | 7/3 | 0,130 | 0,05 | 0,080 | 5,00 |
| 3 | 5/5 | 0,185 | 0,05 | 0,135 | 5,00 |
| 4 | 3/7 | 0,140 | 0,05 | 0,090 | 5,00 |
| 5 | 0/10 | 0,105 | 0,05 | 0,055 | 5,00 |

## REFERENCES

[1] Q. M. Zhang, V. Bharti, and X. Zhao, Science 1998, 280, 2101.
[2] W. J. Li, Q. J. Meng, Y. S. Zheng, Z. C. Zhang, W. M. Xia, and Z. Xu, Appl. Phys. Lett. 2010, 96, 192905.
[3] J. K. Yuan, Z. M. Dang, S. H. Yao, J. W. Zha, T. Zhou, S. T. Li, and J. Bai, J. Mater. Chem.2010, 20, 2441.

## Revendications

**1.** Procédé de synthèse de nanotubes de carbone (abrégé NTC) par dépôt chimique en phase vapeur (abrégé CVD) à la surface d'articles, lesdits articles se présentant sous forme d'un mélange A (i) de particules et/ou fibres d'un matériau comprenant au moins un atome d'oxygène et (ii) de particules et/ou fibres d'un matériau choisi parmi les carbures et/ou d'un matériau comprenant au moins un atome de silicium, ledit procédé comprenant les étapes suivantes, réalisées sous un courant de gaz inerte(s) éventuellement en mélange avec de l'hydrogène :

(i) chauffage dans une enceinte réactionnelle dudit mélange A d'articles à une température comprise entre 400°C et 900°C ;
(ii) introduction dans ladite enceinte, d'une source de carbone constituée d'acétylène et/ou de xylène, et d'un catalyseur comprenant du ferrocène ;
(iii) exposition dudit mélange A, chauffé, à ladite source de carbone et audit catalyseur comprenant du ferrocène pendant une durée suffisante pour obtenir des NTC à la surface des articles formant ledit mélange A;
(iv) récupération d'un mélange B à l'issue de l'étape (iii), éventuellement après une étape de refroidissement, ledit mélange B étant formé du mélange A d'articles comprenant à leur surface des NTC ;
(v) éventuellement séparation des particules et/ou fibres d'un matériau comprenant au moins un atome d'oxygène, lesdites particules et/ou fibres comprenant à leur surface des NTC des particules et/ou fibres d'un matériau choisi parmi les carbures et/ou comprenant au moins un atome de silicium, lesdites particules et/ou fibres comprenant à leur surface des NTC,

procédé dans lequel le matériau choisi parmi les carbures et/ou comprenant au moins un atome de silicium est choisi parmi le nitrure de silicium ($Si_3N_4$), le carbure de silicium (SiC), la silice ($Si_2O$), le TiC et $B_4C$, et/ou dans lequel le matériau comprenant au moins un atome d'oxygène est l'$Al_2O_3$.

2. Procédé selon la revendication 1, dans lequel le rapport en masse du mélange A de (particules et/ou fibres d'un matériau comprenant au moins un atome d'oxygène) /(particules et/ou fibres d'un matériau choisi parmi les carbures et/ou comprenant au moins un atome de silicium) est compris entre 10/90 et 90/10, avantageusement entre 25/75 et 75/25, mieux encore entre 40/60 et 60/40.

3. Procédé selon l'une quelconque des revendications précédentes dans lequel la température de chauffage de l'étape (i) est comprise entre 650 et 900°C ou entre 400-550°C.

4. Procédé selon l'une quelconque des revendications précédentes, dans lequel le matériau dans l'étape (i) se présente sous forme de fibres de diamètre de 1 à 100 $\mu$m, avantageusement entre 4 et 50 $\mu$m ou de particules de diamètre de 0,1 à 100 $\mu$m, avantageusement entre 0,2 et 40 $\mu$m.

5. Procédé selon l'une quelconque l'une des revendications précédentes, dans lequel dans l'étape (ii), l'acétylène est introduit dans l'enceinte réactionnelle sous forme de gaz en une quantité supérieure à 0 et allant jusqu'à 20% en volume du gaz total avec une vitesse linéaire de $5,0 \times 10^{-6}$ à $1,0 \times 10^{-1}$ m/s.

6. Procédé selon l'une quelconque des revendications précédentes, dans lequel dans l'étape (ii), le xylène est introduit dans l'enceinte réactionnelle sous forme de micro gouttelettes via un spray, éventuellement mélangé avec le ferrocène, le débit de xylène étant contrôlé de 0,1 à 0,7 ml/min.

7. Procédé selon la revendication 6, dans lequel la teneur en ferrocène dans le mélange xylène et ferrocène est comprise entre 0,001 à 0,3 g de ferrocène/ml de xylène.

8. Procédé selon l'une quelconque des revendications précédentes, dans lequel dans l'étape (iii), le mélange A est exposé à la source de carbone et au catalyseur pendant une durée de 1 à 120 minutes.

9. Procédé selon l'une quelconque des revendications précédentes, dans lequel les étapes (i) à (iv) sont réalisées sous un courant de gaz inerte(s) éventuellement en mélange avec de l'hydrogène avec un rapport hydrogène/gaz inerte(s) de 0/100 à 50/50.

10. Mélange (i) de particules et/ou fibres d'un matériau comprenant au moins un atome d'oxygène, avantageusement l'$Al_2O_3$ et (ii) de particules et/ou fibres d'un matériau choisi parmi les carbures et/ou comprenant au moins un atome de silicium, lesdites particules et/ou fibres comprenant à leur surface des NTC, ledit mélange étant obtenu ou susceptible d'être obtenu par un procédé selon l'une quelconque des revendications 1 à 9.

11. Mélange selon la revendication 10, ayant une prise de masse comprise entre 0,2 et 80% par rapport à la masse du matériau de départ.

12. Mélange selon la revendication 10 ou 11, dans lequel le nombre de NTC à la surface du matériau est compris entre 5 et 200 par microm$^2$.

13. Mélange selon l'une quelconque des revendications 10 à 12, présentant une surface spécifique comprise entre 150 et 2000 m$^2$/g.

14. Mélange selon l'une quelconque des revendications 10 à 13, comprenant, en outre, un polymère, un métal ou un matériau céramique.

15. Objet comprenant un mélange selon l'une quelconque des revendications 10 à 14 ou comprenant un mélange susceptible d'être obtenu à l'issue du procédé selon l'une quelconque des revendications 1 à 10.

16. Utilisation (i) d'un mélange selon l'une quelconque des revendications 10 à 14 ou (ii) de particules et/ou fibres d'un matériau comprenant au moins un atome d'oxygène, avantageusement $Al_2O_3$ lesdites particules et/ou fibres comprenant à leur surface des NTC, ou de (iii) particules et/ou fibres d'un matériau choisi parmi les carbures lesdites particules et/ou fibres comprenant à leur surface des NTC, ou (iv) de particules et/ou fibres d'un matériau comprenant au moins un atome de silicium lesdites particules et/ou fibres comprenant à leur surface des NTC, et lesdites fibres et/ou particules de (ii)-(iv) étant susceptibles d'être obtenues à l'issue du procédé selon l'une quelconque des revendications 1 à 9, comme renfort pour la préparation de matériaux composites structuraux et fonctionnels.

**Patentansprüche**

1. Verfahren zur Synthese von Kohlenstoff-Nanoröhren (abgekürzt CNT) durch chemische Dampfabscheidung (abgekürzt CVD) auf der Oberfläche von Objekten, wobei die Objekte die Form einer Mischung A (i) von Partikeln und/oder Fasern eines Materials, umfassend mindestens ein Sauerstoffatom, und (ii) von Partikeln und/oder Fasern eines Materials aufweisen, ausgewählt aus den Carbiden und/oder eines Materials, umfassend mindestens ein Siliziumatom, wobei das Verfahren die folgenden Schritte umfasst, die unter einem Strom von Inertgas(en), eventuell in Mischung mit Wasserstoff, durchgeführt werden:

   (i) Erhitzen in einer Reaktionskammer der Mischung A von Objekten bei einer Temperatur zwischen 400 °C und 900 °C;
   (ii) Einführen in die Kammer einer Kohlenstoffquelle, bestehend aus Acetylen und/oder Xylol und einem Katalysator, umfassend Ferrocen;
   (iii) Aussetzen der erhitzten Mischung A an die Kohlenstoffquelle und den Katalysator, umfassend Ferrocen, während einer ausreichenden Dauer, um CNT auf der Oberfläche der Objekte, die die Mischung A bilden, zu erhalten;
   (iv) Wiedergewinnen einer Mischung B am Ende von Schritt (iii), eventuell nach einem Schritt des Abkühlens, wobei die Mischung B aus der Mischung A von Objekten gebildet ist, die auf ihrer Oberfläche CNT umfassen;
   (v) eventuell Trennen der Partikel und/oder Fasern eines Materials, umfassend mindestens ein Sauerstoffatom, wobei die Partikel und/oder Fasern auf ihrer Oberfläche CTNs der Partikel und/oder Fasern eines Materials umfassen, ausgewählt aus den Carbiden und/oder umfassend mindestens ein Siliziumatom, wobei die Partikel und/oder Fasern an ihrer Oberfläche CTNs umfassen,

   Verfahren, bei dem das Material, ausgewählt aus den Carbiden und/oder umfassend mindestens ein Siliziumatom, ausgewählt ist aus Silizium ($Si_3N_4$), Siliziumcarbid (SiC), Siliziumdioxid ($Si_2O$), TiC und $B_4C$, und/oder wobei das Material, umfassend mindestens ein Sauerstoffatom, $Al_2O_3$ ist.

2. Verfahren nach Anspruch 1, wobei das Massenverhältnis von Mischung A aus (Partikel und/oder Fasern eines Materials, umfassend mindestens ein Sauerstoffatom) / (Partikel und/oder Fasern eines Material, ausgewählt aus den Carbiden und/oder umfassend mindestens ein Siliziumatom), zwischen 10/90 und 90/10, vorteilhafterweise zwischen 25/75 und 75/25, noch besser zwischen 40/60 und 60/40 liegt.

3. Verfahren nach einem der vorhergehenden Ansprüche, wobei die Heiztemperatur von Schritt (i) zwischen 650 und 900 °C oder zwischen 400 - 550 °C liegt.

4. Verfahren nach einem der vorhergehenden Ansprüche, wobei das Material in Schritt (i) die Form von Fasern mit einem Durchmesser von 1 bis 100 $\mu$m, vorteilhafterweise zwischen 4 et 50 $\mu$m oder Partikeln mit einem Durchmesser von 0,1 bis 100 $\mu$m, vorteilhafterweise zwischen 0,2 und 40 $\mu$m aufweist.

5. Verfahren nach einem der vorhergehenden Ansprüche, wobei in Schritt (ii) das Acetylen in die Reaktionskammer in Form von Gas in einer Menge eingeführt wird, die größer als 0 ist und bis 20 Vol-% des gesamten Gases mit einer linearen Geschwindigkeit von $5,0 \times 10^{-6}$ bis $1,0 \times 10^{-1}$ m/s reicht.

6. Verfahren nach einem der vorhergehenden Ansprüche, wobei in Schritt (ii) das Xylen in die Reaktionskammer in Form von Mikrotröpfchen über ein Spray eingeführt wird, eventuell gemischt mit dem Ferrocen, wobei der Durchsatz von Xylen von 0,1 bis 0,7 ml/min gesteuert wird.

7. Verfahren nach Anspruch 6, wobei der Gehalt an Ferrocen in der Mischung aus Xylen und Ferrocen zwischen 0,001 bis 0,3 g Ferrocen/ml Xylen liegt.

**8.** Verfahren nach einem der vorhergehenden Ansprüche, wobei in Schritt (iii) die Mischung A an die Kohlenstoffquelle und an den Katalysator während einer Dauer von 1 bis 120 Minuten ausgesetzt ist.

**9.** Verfahren nach einem der vorhergehenden Ansprüche, wobei die Schritte (i) bis (iv) unter einem Strom von Inertgas(en) durchgeführt werden, eventuell in Mischung mit Wasserstoff mit einem Verhältnis Wasserstoff/Inertgas(e) von 0/100 bis 50/50.

**10.** Mischung (i) aus Partikeln und/oder Fasern eines Materials, umfassend mindestens ein Sauerstoffatom, vorteilhafterweise $Al_2O_3$, und (ii) Partikel und/oder Fasern eines Materials, ausgewählt aus den Carbiden und/oder umfassend mindestens ein Siliziumatom, wobei die Partikel und/oder Fasern an ihrer Oberfläche CTNs umfassen, wobei die Mischung durch ein Verfahren nach einem der Ansprüche 1 bis 9 erhalten wird oder erhalten werden kann.

**11.** Mischung nach Anspruch 10, umfassend eine Zunahme der Masse, die zwischen 0,2 und 80 % der Masse des Ausgangsmaterials liegt.

**12.** Mischung nach Anspruch 10 oder 11, wobei die Anzahl von CTN an der Oberfläche des Materials zwischen 5 und 200 pro $Mikrom^2$ liegt.

**13.** Mischung nach einem der Ansprüche 10 bis 12, umfassend eine spezifische Oberfläche, die zwischen 150 et 2000 $m^2/g$ liegt.

**14.** Mischung nach einem der Ansprüche 10 bis 13, umfassend außerdem ein Polymer, ein Metall oder ein keramisches Material.

**15.** Objekt, umfassend eine Mischung nach einem der Ansprüche 10 bis 14 oder umfassend eine Mischung, die am Ende des Verfahrens nach einem der Ansprüche 1 bis 10 erhalten werden kann.

**16.** Verwendung (i) von einer Mischung nach einem der Ansprüche 10 bis 14 oder (ii) von Partikeln und/oder Fasern eines Materials, umfassend mindestens ein Sauerstoffatom, vorteilhafterweise $Al_2O_3$, wobei die Partikel und/oder Fasern an ihrer Oberfläche CTNs umfassen, oder (iii) von Partikeln und/oder Fasern eines Materials, ausgewählt aus den Carbiden, wobei die Partikel und/oder Fasern an ihrer Oberfläche CTNs umfassen, oder (iv) von Partikeln und/oder Fasern eines Materials, umfassend mindestens ein Siliziumatom, wobei die Partikel und/oder Fasern an ihrer Oberfläche CTNs umfassen, und wobei die Fasern und/oder Partikel von (ii)-(iv) am Ende des Verfahrens nach einem der Ansprüche 1 bis 9 erhalten werden können, als Verstärkung zur Herstellung von strukturellen und funktionellen Verbundmaterialien.

**Claims**

**1.** A process for the synthesis of carbon nanotubes (abbreviation CNTs) by chemical vapor deposition (abbreviation CVD) at the surface of articles, said articles being provided in the form of a mixture A (i) of particles and/or fibers of a material comprising at least one oxygen atom and (ii) of particles and/or fibers of a material chosen from carbides and/or of a material comprising at least one silicon atom, said process comprising the following steps, carried out under a stream of inert gas(es), optionally in mixture with hydrogen:

(i) heating, in a reaction chamber, said mixture A of articles at a temperature of between 400°C and 900°C;
(ii) introducing, into said chamber, a carbon source consisting of acetylene and/or xylene and a ferrocene-comprising catalyst;
(iii) exposing said heated mixture A to said carbon source and to said ferrocene-comprising catalyst for a period of time sufficient to obtain CNTs at the surface of the articles forming said mixture A;
(iv) recovering a mixture B at the end of step (iii), optionally after a cooling step, said mixture B being formed of the mixture A of articles comprising CNTs at their surface;
(v) optionally separating the particles and/or fibers of a material comprising at least one oxygen atom, said particles and/or fibers comprising CNTs at their surface, from the particles and/or fibers of a material chosen from carbides and/or comprising at least one silicon atom, said particles and/or fibers comprising CNTs at their surface,

process in which the material chosen from carbides and/or comprising at least one silicon atom is chosen from

silicon nitride ($Si_3N_4$), silicon carbide (SiC), silica ($SiO_2$), TiC and $B_4C$ and/or in which the material comprising at least one oxygen atom is $Al_2O_3$.

2. The process according to claim 1, in which the ratio by weight of the mixture A of (particles and/or fibers of a material comprising at least one oxygen atom)/(particles and/or fibers of a material chosen from carbides and/or comprising at least one silicon atom) is between 10/90 and 90/10, advantageously between 25/75 and 75/25, better still between 40/60 and 60/40.

3. The process according to any one of the preceding claims, in which the heating temperature of step (i) is between 650 and 900°C or between 400 and 550°C.

4. The process according to any one of the preceding claims, in which the material in step (i) is provided in the form of fibers having a diameter of 1 to 100 $\mu$m, advantageously between 4 and 50 $\mu$m, or of particles having a diameter of 0.1 to 100 $\mu$m, advantageously between 0.2 and 40 $\mu$m.

5. The process according to any one of the preceding claims, in which, in step (ii), the acetylene is introduced into the reaction chamber in the gas form in an amount of greater than 0% and ranging up to 20% by volume of the total gas with a linear velocity of $5.0 \times 10^{-6}$ to $1.0 \times 10^{-1}$ m/s.

6. The process according to any one of the preceding claims, in which, in step (ii), the xylene is introduced into the reaction chamber in the form of microdroplets via a spray, optionally mixed with the ferrocene, the flow rate of xylene being controlled from 0.1 to 0.7 ml/min.

7. The process according to claim 6, in which the ferrocene content of the xylene and ferrocene mixture is between 0.001 and 0.3 g of ferrocene/ml of xylene.

8. The process according to any one of the preceding claims, in which, in step (iii), the mixture A is exposed to the carbon source and to the catalyst for a period of time of 1 to 120 minutes.

9. The process according to any one of the preceding claims, in which steps (i) to (iv) are carried out under a stream of inert gas(es), optionally in mixture with hydrogen, with a hydrogen/inert gas(es) ratio of 0/100 to 50/50.

10. A mixture (i) of particles and/or fibers of a material comprising at least one oxygen atom, advantageously $Al_2O_3$, and (ii) of particles and/or fibers of a material chosen from carbides and/or comprising at least one silicon atom, said particles and/or fibers comprising CNTs at their surface, said mixture being obtained or obtainable by a process according to any one of claims 1 to 9.

11. The mixture according to claim 10, having a rise in weight of between 0.2% and 80%, with respect to the weight of the starting material.

12. The mixture according to claim 10 or 11, in which the number of CNTs at the surface of the material is between 5 and 200 per $microm^2$.

13. The mixture according to any one of claims 10 to 12, exhibiting a specific surface of between 150 and 2000 $m^2$/g.

14. The mixture according to any one of claims 10 to 13, additionally comprising a polymer, a metal or a ceramic material.

15. An object comprising a mixture according to any one of claims 10 to 14 or comprising a mixture obtainable at the end of the process according to any one of claims 1 to 10.

16. The use (i) of a mixture according to any one of claims 10 to 14, or (ii) of particles and/or fibers of a material comprising at least one oxygen atom, advantageously $Al_2O_3$, said particles and/or fibers comprising CNTs at their surface, or (iii) of particles and/or fibers of a material chosen from carbides, said particles and/or fibers comprising CNTs at their surface, or (iv) of particles and/or fibers of a material comprising at least one silicon atom, said particles and/or fibers comprising CNTs at their surface, and said fibers and/or particles of (ii)-(iv) being obtainable at the end of the process according to any one of claims 1 to 9, as reinforcer in the preparation of structural and functional composite materials.

**FIG.1**

**FIG.2**

**Fig.3**

**Fig.4**        **Fig.5**

**Fig.6**

**Fig.7**

**Fig.8**

**Fig.9**

**Fig.10**

**Fig.11**

**Fig.12**

**Fig.13**

Fig. 14

Fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010066990 A

**Littérature non-brevet citée dans la description**

- *The journal of the American Chemical Society,* vol. 60, 309-51938
- **Q. M. ZHANG ; V. BHARTI ; X. ZHAO.** *Science,* 1998, vol. 280, 2101
- **W. J. LI ; Q. J. MENG ; Y. S. ZHENG ; Z. C. ZHANG ; W. M. XIA ; Z. XU.** *Appl. Phys. Lett.,* 2010, vol. 96, 192905
- **J. K. YUAN ; Z. M. DANG ; S. H. YAO ; J. W. ZHA ; T. ZHOU ; S. T. LI ; J. BAI.** *J. Mater. Chem,* 2010, vol. 20, 2441